# DEMANDE DE BREVET EUROPEEN

(11) **EP 3 270 211 A1**
(43) Date de publication de la demande: **17.01.2018**
(21) Numéro de dépôt: 17175738.8
(22) Date de dépôt: 13.06.2017
(51) Int. Cl.: G02B 27/22, G02B 27/01, G02B 7/12

(54) **PROCÉDÉ D'AFFICHAGE DE VIGNETTES SUR UN ÉCRAN D'AFFICHAGE, PROGRAMME D'ORDINATEUR, APPAREIL ÉLECTRONIQUE ET SYSTÈME ÉLECTRONIQUE DE VISUALISATION ASSOCIÉS**

(30) Priorité: 13.07.2016 FR 1656769
(71) Demandeur: Parrot Drones, 75010 Paris (FR)
(72) Inventeur: SEYDOUX, Henri, 75017 PARIS (FR); BANDA, Luc, 94120 FONTENAY-SOUS-BOIS (FR)
(74) Mandataire: Lavoix

(57) **Abrégé**

L'invention concerne un procédé d'affichage de vignettes (44) sur un écran d'affichage (40) apte à être disposé dans un casque (20), le casque (20) comportant deux dispositifs optiques (60), destinés à être positionnés entre l'écran d'affichage (40) et les yeux (22) d'un utilisateur.

Ce procédé comprend :
- l'affichage, sur l'écran d'affichage (40), de deux vignettes (44) disjointes en deux positions distinctes, chaque vignette (44) étant associée à un oeil (22) respectif de l'utilisateur, et
- la modification de la position d'au moins une vignette (44) sur l'écran d'affichage (40), en cas d'acquisition d'un signal de commande d'une modification de ladite position.

## Description

La présente invention concerne un procédé d'affichage de vignettes sur un écran d'affichage apte à être disposé dans un casque, le casque comportant deux dispositifs optiques, destinés à être positionnés entre l'écran d'affichage et les yeux d'un utilisateur.

L'invention concerne également un programme d'ordinateur comportant des instructions logicielles qui, lorsqu'elles sont exécutées par un ordinateur, mettent en oeuvre un tel procédé de traitement.

L'invention concerne également un appareil électronique apte à être disposé dans un tel casque, et un système électronique de visualisation comprenant un tel appareil électronique.

On connait un casque de réalité virtuelle destiné à être en contact avec le visage d'un utilisateur. Un tel casque comprend classiquement un support de réception configuré pour recevoir un appareil électronique muni d'un écran d'affichage, une surface d'appui destinée à être en contact avec le visage de l'utilisateur, et deux dispositifs optiques disposés entre le support de réception et la surface d'appui. Les dispositifs optiques, tels que des lentilles optiques, sont destinés à être positionnés entre l'écran d'affichage et les yeux de l'utilisateur.

L'appareil électronique est par exemple amovible par rapport au casque, et est alors typiquement un ordiphone (de l'anglais *smartphone*)*.* En variante, l'appareil électronique est intégré au casque.

Lors du fonctionnement d'un tel casque, deux vignettes disjointes sont affichées en deux positions distinctes sur l'écran d'affichage de l'appareil électronique, chaque vignette étant associée à un oeil respectif de l'utilisateur, et les dispositifs optiques effectuent alors une transformation optique des vignettes pour que l'utilisateur perçoive dans son champ visuel une unique image, ayant en outre une taille plus grande que les vignettes, afin de procurer une vision immersive pour l'utilisateur.

Afin d'adapter un tel casque aux différentes morphologies d'utilisateurs, il est généralement possible d'ajuster la distance entre les yeux et les dispositifs optiques, par exemple via une molette de réglage de la distance entre la surface d'appui et les dispositifs optiques. Dans certains cas, il est en outre possible de régler la distance entre les deux dispositifs optiques, afin d'adapter le casque à la distance entre les pupilles de l'utilisateur (IPD - de l'anglais *InterPupillary Distance*)*,* celle-ci étant variable d'un utilisateur à l'autre.

Toutefois, même après avoir effectué ces réglages préliminaires, l'utilisateur ne bénéficie pas toujours d'un confort visuel satisfaisant en utilisant un tel casque.

Le but de l'invention est alors de proposer un procédé d'affichage de vignettes sur un écran apte à être disposé dans un casque, permettant d'offrir un meilleur confort visuel pour l'utilisateur.

A cet effet, l'invention a pour objet un procédé d'affichage de vignettes sur un écran d'affichage apte à être disposé dans un casque, le casque comportant deux dispositifs optiques, destinés à être positionnés entre l'écran d'affichage et les yeux d'un utilisateur, le procédé comprenant :
- l'affichage, sur l'écran d'affichage, de deux vignettes disjointes en deux positions distinctes, chaque vignette étant associée à un oeil respectif de l'utilisateur, et
- la modification de la position d'au moins une vignette sur l'écran d'affichage, en cas d'acquisition d'un signal de commande d'une modification de ladite position.

Le procédé d'affichage selon l'invention permet alors, lorsque les deux vignettes sont affichées à l'écran, de modifier la position sur l'écran d'au moins une vignette, en cas d'acquisition d'un signal de commande d'une telle modification de la position, ceci afin d'ajuster la position de la vignette par rapport à l'oeil et au dispositif optique associés. Le signal de commande de la modification de la position de la vignette est, par exemple, issu d'un organe de commande actionné par l'utilisateur.

Autrement dit, le procédé selon l'invention permet un ajustement du positionnement de la vignette par rapport à l'oeil et au dispositif optique associés, lorsque le casque est placé sur la tête de l'utilisateur.

En outre, l'utilisateur perçoit directement l'effet d'un tel ajustement à travers l'image qu'il perçoit dans son champ visuel, cette image résultant de la transformation optique des vignettes, effectuée par les dispositifs optiques.

Suivant d'autres aspects avantageux de l'invention, le procédé d'affichage comporte l'une ou plusieurs des caractéristiques suivantes, prises isolément ou suivant toutes les combinaisons techniquement possibles :
- la position de chaque vignette est modifiée en cas d'acquisition d'un ou plusieurs signaux de commande d'une modification desdites positions ;
- une vignette comporte une partie d'un motif, le motif étant découpé en deux parties complémentaires, et l'autre vignette comporte l'autre partie du motif, un positionnement correct des vignettes par rapport aux yeux et dispositifs optiques associés correspondant à une coïncidence entre les deux parties dans le champ visuel de l'utilisateur de manière à y reconstituer le motif ;
- le motif s'étend suivant deux directions orthogonales, et le motif est découpé suivant les deux directions orthogonales, chaque partie du motif s'étendant suivant les deux directions orthogonales ; et
- le motif est en forme d'une croix.

L'invention a également pour objet un programme d'ordinateur comportant des instructions logicielles qui, lorsqu'elles sont exécutées par un ordinateur, mettent en oeuvre un procédé tel que défini ci-dessus.

L'invention a également pour objet un appareil électronique apte à être disposé dans un casque, le casque comportant deux dispositifs optiques, l'appareil électronique comprenant :
- un écran d'affichage, les deux dispositifs optiques étant destinés à être positionnés entre l'écran d'affichage et les yeux d'un utilisateur,
- un module d'affichage configuré pour afficher, sur l'écran d'affichage, deux vignettes disjointes en deux positions distinctes, chaque vignette étant associée à un oeil respectif de l'utilisateur,
- un module d'acquisition configuré pour acquérir un signal de commande d'une modification de la position d'une vignette sur l'écran d'affichage, et
- un module de modification configuré pour modifier la position de ladite vignette, en cas d'acquisition dudit signal de commande.

Suivant un autre aspect avantageux de l'invention, l'appareil électronique comporte la caractéristique suivante :
- une vignette comporte une partie d'un motif, le motif étant découpé en deux parties complémentaires, et l'autre vignette comporte l'autre partie du motif, un positionnement correct des vignettes par rapport aux yeux et dispositifs optiques associés correspondant à une coïncidence entre les deux parties dans le champ visuel de l'utilisateur de manière à y reconstituer le motif.

L'invention a également pour objet un système électronique de visualisation, comprenant :
- un appareil électronique, comportant un écran d'affichage, l'appareil électronique étant tel que défini ci-dessus, et
- un casque comportant un support de réception configuré pour recevoir l'appareil électronique, une surface d'appui destinée à être en contact avec le visage d'un utilisateur, et deux dispositifs optiques disposés entre le support de réception et la surface d'appui, les dispositifs optiques étant destinés à être positionnés entre l'écran d'affichage et les yeux de l'utilisateur.

Suivant d'autres aspects avantageux de l'invention, le système électronique de visualisation comporte l'une ou plusieurs des caractéristiques suivantes, prises isolément ou suivant toutes les combinaisons techniquement possibles :
- le système comprend en outre un module de réception configuré pour recevoir au moins une image de la part d'un engin volant motorisé, tel qu'un drone, en particulier un drone à voilure tournante, et le module d'affichage est relié au module de réception et est apte à afficher sur l'écran d'affichage chaque image reçue ; et
- le système est un système de visualisation en réalité virtuelle.

Ces caractéristiques et avantages de l'invention apparaîtront à la lecture de la description qui va suivre, donnée uniquement à titre d'exemple non limitatif, et faite en référence aux dessins annexés, sur lesquels :
- la figure 1 est une vue en perspective d'un système électronique de visualisation selon l'invention, comprenant un appareil électronique muni d'un écran d'affichage, et un casque comportant un support de réception de l'appareil électronique, une surface d'appui contre le visage d'un utilisateur, et deux dispositifs optiques disposés entre le support de réception et la surface d'appui, le système de visualisation étant en outre relié à une manette équipée de deux manches à balai ;
- la figure 2 est une représentation schématique partielle du casque de la figure 1, avec l'appareil électronique ;
- la figure 3 est une vue de deux vignettes affichées à l'écran de l'appareil électronique de la figure 2 ;
- la figure 4 est une vue en perspective de la manette de la figure 1 ; et
- la figure 5 est un organigramme d'un procédé d'affichage selon l'invention.

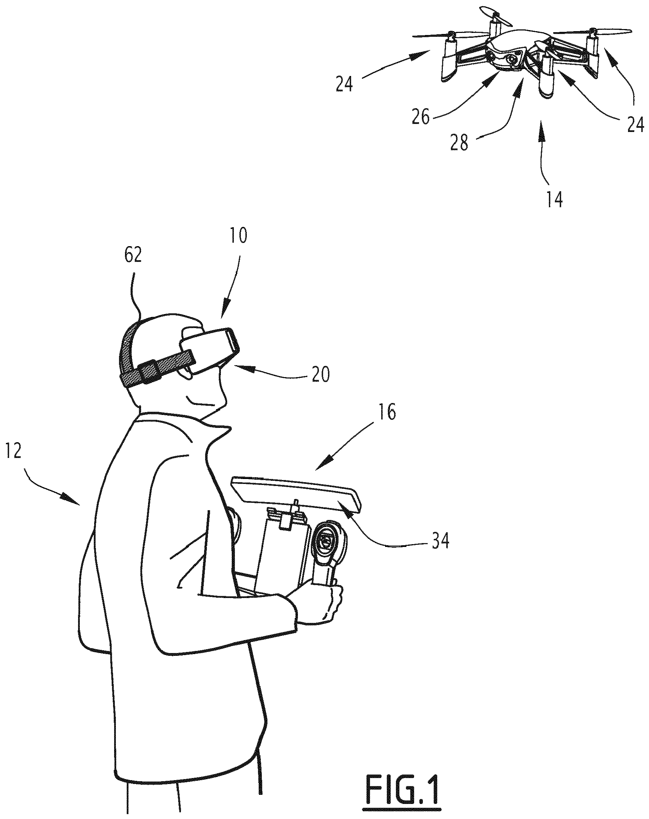

Sur la figure 1, un système électronique de visualisation 10 permet à un utilisateur 12 de visualiser des images, notamment des images reçues de la part d'un engin volant motorisé 14, tel qu'un drone, en particulier un drone à voilure tournante. Le système électronique de visualisation 10 est, par exemple, relié à une manette 16 via une liaison de données, non représentée, la liaison de données étant une liaison radioélectrique ou encore une liaison filaire.

Le système électronique de visualisation 10 comprend un appareil électronique 18 et un casque 20 destiné à être en contact avec le visage de l'utilisateur 12, en regard de ses yeux 22.

Dans l'exemple de la figure 1, le système électronique de visualisation 10 comprend en outre un module de réception, non représenté, configuré pour recevoir au moins une image de la part de l'engin volant motorisé 14, la transmission de l'image étant effectuée de préférence par ondes radioélectriques.

Le système de visualisation 10 est par exemple un système de visualisation en réalité virtuelle, c'est-à-dire un système permettant à l'utilisateur 12 de visualiser une image dans son champ visuel, avec un angle de champ de vision, également appelé FOV (de l'anglais *Field Of Vision,* ou *Field Of View*)*,* ayant une valeur importante, typiquement supérieure à 90°, de préférence supérieure ou égale à 100°, afin de procurer une vision immersive pour l'utilisateur 12.

L'engin volant motorisé 14 est connu en soi, et est par exemple un drone, c'est-à-dire un aéronef sans pilote à bord. Le drone est par exemple un drone à voilure tournante, comportant au moins un rotor 24. Sur la figure 1, le drone comporte une pluralité de rotors 24, et est alors également appelé drone multirotor. Le nombre de rotors 24 est en particulier égal à quatre dans cet exemple, le drone étant alors appelé quadrirotor.

L'engin volant motorisé 14 comporte un capteur d'images 26 configuré pour acquérir au moins une image d'une scène, et un module de transmission 28 configuré pour transmettre, de préférence par ondes radioélectriques, à destination d'un équipement électronique, tel que le module de réception, la ou les images acquises par le capteur d'images 26.

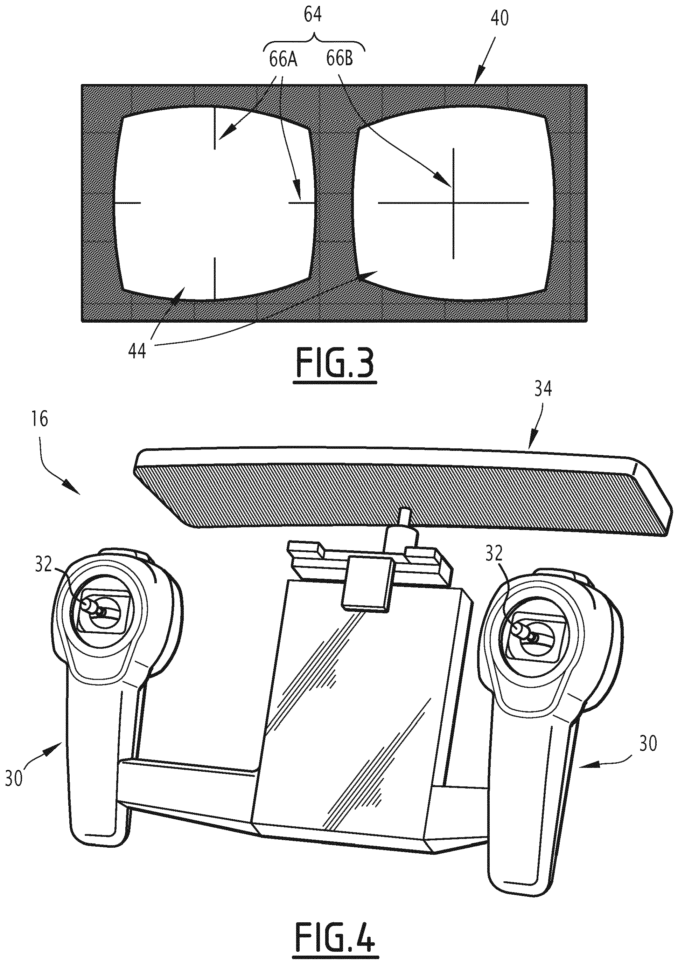

La manette 16, visible sur les figures 1 et 4, est connue en soi, et permet par exemple de piloter l'engin volant motorisé 14. La manette 16 comprend deux poignées de préhension 30, chacune étant destinée à être saisie par une main respective de l'utilisateur 12, une pluralité d'organes de commande, dont deux manches à balai 32 (de l'anglais *joystick*)*,* chacun étant disposé à proximité d'une poignée de préhension 30 respective et étant destiné à être actionné par l'utilisateur 12, de préférence par un pouce respectif.

La manette 16 comprend également une antenne radioélectrique 34 et un émetteur-récepteur radioélectrique, non représenté, pour l'échange de données par ondes radioélectriques avec l'engin volant motorisé 14, à la fois en liaison montante et en liaison descendante.

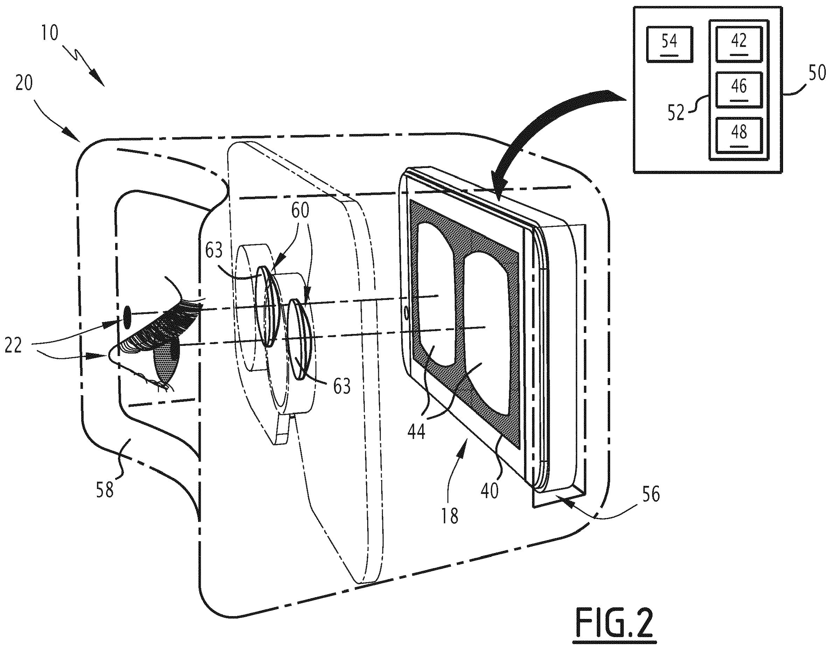

L'appareil électronique 18 est apte à être disposé dans le casque 20, comme représenté sur la figure 2. L'appareil électronique 18 est, par exemple, un ordiphone (de l'anglais *smartphone*).

Dans l'exemple de la figure 2, l'appareil électronique 18 est amovible par rapport au casque 20. En variante non représentée, l'appareil électronique 18 est intégré au casque 20.

L'appareil électronique 18 comprend un écran d'affichage 40, un module d'affichage 42 configuré pour afficher des données sur l'écran d'affichage 40, notamment deux vignettes disjointes 44 en deux positions distinctes, comme représenté sur la figure 2, chaque vignette 44 étant associée à un oeil 22 respectif de l'utilisateur 12. Dans l'exemple décrit, le module d'affichage 42 est en outre relié au module de réception, et est alors apte à afficher, sur l'écran d'affichage 40, chaque image reçue par le module de réception.

L'appareil électronique 18 comprend en outre un module d'acquisition 46 configuré pour acquérir un signal de commande d'une modification de la position d'une vignette 44 sur l'écran d'affichage 40, et un module de modification 48 configuré pour modifier la position de ladite vignette 44, en cas d'acquisition dudit signal de commande par le module d'acquisition 46. Le module de modification 48 est en outre configuré pour modifier la position de chaque vignette 44 sur l'écran d'affichage 40, en cas d'acquisition par le module d'acquisition 46 d'un ou plusieurs signaux de commande d'une modification desdites positions.

Dans l'exemple de la figure 2, l'appareil électronique 18 comprend une unité de traitement d'informations 50, formée par exemple d'une mémoire 52 et d'un processeur 54 associé à la mémoire 52.

Le casque 20 comporte un support de réception 56 configuré pour recevoir l'appareil électronique 18, une surface d'appui 58 destinée à être en contact avec le visage de l'utilisateur 12, et deux dispositifs optiques 60 disposés entre le support de réception 56 et la surface d'appui 58, les dispositifs optiques 60 étant destinés à être positionnés entre l'écran d'affichage 40 et les yeux 22 de l'utilisateur 12, comme représenté sur la figure 2.

Le casque 20 comporte en outre une sangle de maintien 62, visible sur la figure 1, permettant de maintenir le casque 20 sur la tête de l'utilisateur 12.

Dans l'exemple de la figure 2, le module d'affichage 42, le module d'acquisition 46 et le module de modification 48 sont réalisés chacun sous forme d'un logiciel exécutable par le processeur 54. La mémoire 52 de l'unité de traitement d'informations 50 est alors apte à stocker un logiciel d'affichage configuré pour afficher des données sur l'écran d'affichage 40, notamment les deux vignettes disjointes 44 en deux positions distinctes, un logiciel d'acquisition configuré pour acquérir un signal de commande d'une modification de la position d'une vignette 44 sur l'écran d'affichage 40, et un logiciel de modification configuré pour modifier la position de ladite vignette 44 sur l'écran d'affichage 40 en cas d'acquisition par le logiciel d'acquisition dudit signal de commande. Le processeur 54 de l'unité de traitement d'informations 50 est alors apte à exécuter le logiciel d'affichage, le logiciel d'acquisition et le logiciel de modification.

En variante non représentée, le module d'affichage 42, le module d'acquisition 46 et le module de modification 48 sont réalisés chacun sous forme d'un composant logique programmable, tel qu'un FPGA (de l'anglais *Field Programmable Gate Array*)*,* ou encore sous forme d'un circuit intégré dédié, tel qu'un ASIC (de l'anglais *Application Specific Integrated Circuit*).

Chaque vignette 44 présente une forme prédéfinie et une taille prédéfinie, cette forme et cette taille dépendant du dispositif optique 60 associé à la vignette 44 respective, en particulier de la transformation optique apte à être effectuée par ce dispositif optique 60. Autrement dit, la vignette 44 correspond à la transformation optique inverse de ce qui doit être perçu par l'utilisateur 12 dans son champ visuel pour cette vignette 44.

Les deux vignettes 44 ont de préférence une forme identique. Les deux vignettes 44 ont de préférence une taille sensiblement identique, c'est-à-dire ont des dimensions sensiblement égales à plus ou moins 10% près.

Par vignette, on entend une zone prédéfinie de l'image qui est affichée sur l'écran d'affichage 40, cette zone prédéfinie étant de préférence entourée d'une bande sombre, telle que qu'une bande noire, comme représenté sur les figures 2 et 3. Les vignettes 44 étant disjointes, les zones de l'image affichée sur l'écran d'affichage 40 sont aussi disjointes.

Chaque dispositif optique 60 est configuré pour effectuer une transformation optique d'une vignette 44 correspondante en la déformant et en la grossissant, afin que l'utilisateur 12 perçoive dans son champ visuel une image globale, résultant de la transformation optique des deux vignettes 44 effectuée par les deux dispositifs optiques 60.

Chaque dispositif optique 60 est par exemple une lentille optique 63. En variante non représentée, chaque dispositif optique 60 comporte un ensemble de miroirs, ou encore un ensemble de lentilles optiques, piloté électroniquement.

Dans l'exemple de la figure 3, avec une vue de l'écran d'affichage 40 sur lequel sont affichées deux vignettes 44, un motif 64 est découpé en deux parties complémentaires 66A, 66B, à savoir une première partie 66A et une deuxième partie 66B. L'une des deux vignettes 44 comporte alors la première partie 66A du motif 64, et l'autre vignette 44 comporte la deuxième partie 66B dudit motif 64. Avec ce contenu particulier des vignettes 44, à savoir l'une des deux vignettes 44 comportant une partie 66A du motif, et l'autre vignette 44 comportant l'autre partie 66B dudit motif, un positionnement correct des vignettes 44 par rapport aux yeux 22 et dispositifs optiques 60 associés correspond alors à une coïncidence entre les deux parties 66A, 66B dans le champ visuel de l'utilisateur 12, de manière à ce que l'utilisateur 12 puisse reconstituer le motif 64 dans son champ visuel.

Le motif 64 s'étend de préférence suivant deux directions orthogonales, comme représenté sur la figure 3, et le motif 64 est alors découpé suivant les deux directions orthogonales, chaque partie 66A, 66B du motif 64 s'étendant suivant les deux directions orthogonales. Le motif 64 est, par exemple, en forme d'une croix.

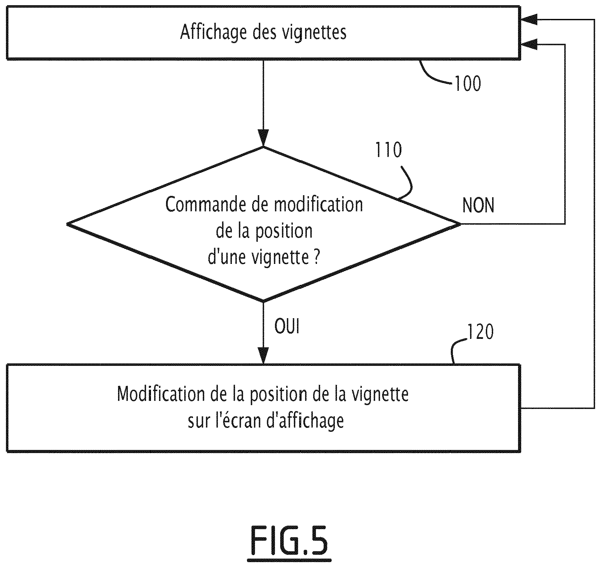

Le fonctionnement du système électronique de visualisation 10 selon l'invention, en particulier de l'appareil électronique 18, va être à présent décrit à l'aide de la figure 5 illustrant un organigramme du procédé d'affichage selon l'invention, mis en oeuvre par ordinateur.

Le procédé d'affichage selon l'invention permet d'effectuer un calibrage de l'affichage de l'appareil électronique 18 par rapport au casque 20, lorsque le casque 20 est positionné sur la tête de l'utilisateur 12, en particulier un calibrage du positionnement des vignettes 44 affichées sur l'écran d'affichage 40 par rapport aux dispositifs optiques 60 et aux yeux 22.

Lors d'une étape 100, les vignettes 44 sont affichées sur l'écran d'affichage 40 par le module d'affichage 42, les deux vignettes 44 étant affichées à la fois, de manière à ce que l'utilisateur 12 perçoive une image globale dans son champ visuel. Les deux vignettes 44 sont, par exemple, affichées simultanément ou quasi simultanément par le module d'affichage 42, par exemple avec une différence temporelle entre les affichages respectifs des vignettes 44 inférieure à 40 ms, de préférence inférieure à 10 ms.

Lors d'une étape suivante 110, le module d'acquisition 46 détermine s'il a reçu un signal de commande d'une modification de la position de l'une des vignettes 44 sur l'écran d'affichage 40, et acquiert ce signal de commande le cas échéant.

En cas d'acquisition d'un signal de commande d'une modification de la position de l'une des vignettes 44, le module de modification 48 modifie, lors d'une étape suivante 120, la position de ladite vignette 44. La position de chaque vignette 44 est modifiable indépendamment de la position de l'autre vignette 44.

Lors de l'étape 120, la position de chaque vignette 44 est modifiée en cas d'acquisition d'un ou plusieurs signaux de commande d'une modification des positions des deux vignettes 44.

Après l'étape 120, le procédé d'affichage retourne à l'étape 100. L'homme du métier comprendra en outre que les vignettes 44 sont de préférence affichées en permanence lors de cette phase de calibrage du positionnement des vignettes 44 par rapport aux dispositifs optiques 60 et aux yeux 22 de l'utilisateur 12.

Lorsqu'au cours de l'étape 110, le module d'acquisition 46 n'a reçu aucun signal de commande d'une modification de la position d'une vignette 44, le procédé retourne directement à l'étape 100, sans effectuer l'étape 120.

Le signal de commande de la modification de la position de la ou des vignettes 44 est, dans l'exemple des figures 1 et 4, issu de l'un des deux manches à balai 32, actionné par l'utilisateur 12. A titre d'exemple, un actionnement du manche à balai 32 gauche par l'utilisateur 12 entraîne une modification de la position de la vignette 44 située à gauche sur la figure 3, et provoque donc le déplacement de cette vignette gauche à l'écran 40. De manière analogue, un actionnement du manche à balai 32 droit par l'utilisateur 12 entraîne une modification de la position de la vignette 44 située à droite sur la figure 3, et provoque le déplacement de cette vignette droite à l'écran 40.

Un déplacement d'un manche à balai 32 par l'utilisateur 12 suivant une direction donnée provoque alors un déplacement de la vignette 44 associée à ce manche à balai 32 suivant la même direction, ce qui permet ainsi de faciliter la modification de la position de ladite vignette 44 par l'utilisateur 12.

En outre, la distance entre la position de la vignette 44 après modification et la position de la vignette 44 avant modification dépend de préférence de la valeur du débattement effectué par le manche à balai 32 correspondant. Cette distance entre les positions après modification et avant modification de la vignette 44 est de préférence une fonction croissante dudit débattement.

Plus généralement, le signal de commande de la modification de la position de la ou des vignettes 44 est issu d'un organe de commande actionné par l'utilisateur 12. L'organe de commande est, par exemple, le manche à balai 32 décrit précédemment, une boule de commande (de l'anglais *trackball*)*,* une molette de réglage, un ou plusieurs boutons de sélection, en particulier un pavé avec quatre flèches directionnelles, ou encore une surface tactile.

Lorsque l'organe de commande est en forme d'une boule de commande, un déplacement de la boule de commande dans une direction donnée entraîne un déplacement de la vignette 44 dans cette direction sur l'écran d'affichage 40, l'amplitude du déplacement de la vignette 44 à l'écran 40 étant une fonction de l'amplitude du mouvement appliqué à la boule de commande par l'utilisateur 12 ; de préférence une fonction croissante, c'est-à-dire que l'amplitude du déplacement de la vignette 44 croît lorsque l'amplitude du mouvement appliqué à la boule de commande augmente.

Lorsque l'organe de commande est en forme d'un pavé à quatre flèches avec des flèches bas et haut pour déplacer la vignette 44 suivant une direction verticale et des flèches gauche et droite pour déplacer la vignette 44 suivant une direction horizontale, un appui sur la flèche haut entraîne un déplacement de la vignette 44 suivant la direction verticale et vers le haut sur l'écran d'affichage 40, le déplacement de ladite vignette 44 étant alors une fonction du nombre d'appuis sur ladite flèche haut et/ou de la durée de l'appui sur ladite flèche haut ; de préférence une fonction croissante. De manière analogue, un appui sur la flèche bas entraîne un déplacement de la vignette 44 suivant la direction verticale et vers le bas ; ou encore un appui sur la flèche gauche, respectivement sur la flèche droite, entraîne un déplacement de la vignette 44 suivant la direction horizontale sur la gauche, respectivement sur la droite. Là aussi, l'amplitude du déplacement de la vignette 44 est de préférence une fonction du nombre d'appuis sur la flèche correspondante et/ou de la durée d'appui sur ladite flèche ; de préférence une fonction croissante.

Lorsque l'organe de commande est en forme d'une surface tactile, un glissement d'un doigt le long de cette surface tactile dans une direction donnée entraîne un déplacement de la vignette 44 dans cette direction sur l'écran d'affichage 40, l'amplitude du déplacement de la vignette 44 à l'écran 40 étant une fonction de l'amplitude du glissement du doigt ; de préférence une fonction croissante.

En variante, le signal de commande de la modification de la position de la ou des vignettes 44 est issu d'un capteur apte à déterminer une position de la vignette 44 par rapport à l'oeil 22 et au dispositif optique 60 associés, le signal de commande étant alors généré par ledit capteur en cas de mauvais positionnement de la vignette 44 par rapport à l'oeil 22 et au dispositif optique 60 associés ; en particulier lorsque la vignette 44, l'oeil 22 et le dispositif optique 60 associés ne sont pas alignés, par exemple lorsque le centre de la vignette 44, le centre du dispositif optique 60 et le centre de la rétine ne sont pas alignés.

Le procédé d'affichage selon l'invention permet alors, de par la modification de la position de l'une ou des vignettes 44 sur l'écran d'affichage 40 en cas d'acquisition d'un signal de commande correspondant, d'ajuster facilement la position de la vignette 44 par rapport à l'oeil 22 et au dispositif optique 60 associés, et par là même d'améliorer le positionnement de la vignette 44 par rapport à l'oeil 22 et au dispositif optique 60 associés, afin de procurer un plus grand confort visuel à l'utilisateur 12.

En outre, lorsqu'un désalignement est présent entre l'une des vignettes 44 et le dispositif optique 60 et l'oeil 22 associés, celui-ci n'est pas forcément perceptible de manière simple par l'utilisateur 12, les yeux 22 ayant en effet tendance à corriger naturellement un tel désalignement, notamment s'il est de faible valeur, c'est-à-dire de l'ordre de quelques degrés, ceci en convergeant ou en divergeant selon le désalignement à corriger. L'utilisateur 12 perçoit alors bien une seule image dans son champ visuel, et non deux images décalées l'une par rapport à l'autre, mais une telle correction engendre un inconfort visuel au fil du temps, les muscles oculaires se fatiguant au fur et à mesure qu'une telle correction est nécessaire.

Le fait d'avoir alors une vignette 44 comportant la première partie 66A du motif 64, et l'autre vignette 44 comportant la deuxième partie 66B du motif 64, les première et deuxième parties 66A, 66B étant complémentaires l'une de l'autre, permet alors de détecter plus facilement un mauvais positionnement d'une vignette 44 par rapport à l'autre.

En effet, un positionnement correct des vignettes 44 par rapport aux yeux 22 et dispositifs optiques 60 associés correspond alors à une coïncidence entre les deux parties complémentaires 66A, 66B dans le champ visuel de l'utilisateur 12, lui permettant alors de reconstituer le motif 64 dans son champ visuel. Au contraire, lorsque les vignettes 44 ne sont pas alignées par rapport aux yeux 22 et dispositifs optiques 60 associés, les deux parties 66A, 66B ne coïncident pas dans le champ visuel de l'utilisateur 12, et le motif 64 n'est alors pas reconstitué dans son champ visuel, le motif 64 apparaissant au contraire de façon fragmentée.

Ceci permet alors d'améliorer encore le confort visuel pour l'utilisateur 12, celui-ci pouvant détecter plus facilement un défaut d'alignement entre les vignettes 44, les dispositifs optiques 60 et ses yeux 22, afin de le corriger ensuite par modification de la position d'au moins une vignette 44 sur l'écran d'affichage 40. L'utilisateur 12 peut ainsi éviter une fatigue de ses muscles oculaires, qui engendrerait à terme un inconfort visuel.

On conçoit ainsi que l'appareil électronique 18 et le procédé d'affichage selon l'invention permettent d'offrir un meilleur confort visuel pour l'utilisateur 12, en permettant un meilleur calibrage du positionnement des vignettes 44 par rapport aux dispositifs optiques 60 et aux yeux 22 de l'utilisateur 12.

## Revendications

1. Procédé d'affichage de vignettes (44) sur un écran d'affichage (40) apte à être disposé dans un casque (20), le casque (20) comportant deux dispositifs optiques (60), destinés à être positionnés entre l'écran d'affichage (40) et les yeux (22) d'un utilisateur (12),
le procédé comprenant :
- l'affichage (100), sur l'écran d'affichage (40), de deux vignettes (44) disjointes en deux positions distinctes, chaque vignette (44) étant associée à un oeil (22) respectif de l'utilisateur (12),
**caractérisé en ce qu'**il comprend en outre :
- la modification (120) de la position d'au moins une vignette (44) sur l'écran d'affichage (40), en cas d'acquisition d'un signal de commande d'une modification de ladite position.

2. Procédé selon la revendication 1, dans lequel la position de chaque vignette (44) est modifiée en cas d'acquisition d'un ou plusieurs signaux de commande d'une modification desdites positions.

3. Procédé selon la revendication 1 ou 2, dans lequel une vignette (44) comporte une partie (66A) d'un motif (64), le motif (64) étant découpé en deux parties (66A, 66B) complémentaires, et l'autre vignette (44) comporte l'autre partie (66B) du motif (64), un positionnement correct des vignettes (44) par rapport aux yeux (22) et dispositifs optiques (60) associés correspondant à une coïncidence entre les deux parties (66A, 66B) dans le champ visuel de l'utilisateur (12) de manière à y reconstituer le motif (64).

4. Procédé selon la revendication 3, dans lequel le motif (64) s'étend suivant deux directions orthogonales, et le motif (64) est découpé suivant les deux directions orthogonales, chaque partie (66A, 66B) du motif (64) s'étendant suivant les deux directions orthogonales.

5. Procédé selon la revendication 4, dans lequel le motif (64) est en forme d'une croix.

6. Programme d'ordinateur comportant des instructions logicielles qui, lorsqu'elles sont exécutées par un ordinateur, mettent en oeuvre un procédé selon l'une quelconque des revendications précédentes.

7. Appareil électronique (18) apte à être disposé dans un casque (20), le casque (20) comportant deux dispositifs optiques (60),
l'appareil électronique (18) comprenant :
- un écran d'affichage (40), les deux dispositifs optiques (60) étant destinés à être positionnés entre l'écran d'affichage (40) et les yeux (22) d'un utilisateur (12),
- un module d'affichage (42) configuré pour afficher, sur l'écran d'affichage (40), deux vignettes (44) disjointes en deux positions distinctes, chaque vignette (44) étant associée à un oeil (22) respectif de l'utilisateur (12),
**caractérisé en ce qu'**il comprend en outre :
- un module d'acquisition (46) configuré pour acquérir un signal de commande d'une modification de la position d'une vignette (44) sur l'écran d'affichage (40), et
- un module de modification (48) configuré pour modifier la position de ladite vignette (44), en cas d'acquisition dudit signal de commande.

8. Appareil électronique (18) selon la revendication 7, dans lequel une vignette (44) comporte une partie (66A) d'un motif (64), le motif (64) étant découpé en deux parties (66A, 66B) complémentaires, et l'autre vignette (44) comporte l'autre partie (66B) du motif (64), un positionnement correct des vignettes (44) par rapport aux yeux (22) et dispositifs optiques (60) associés correspondant à une coïncidence entre les deux parties (66A, 66B) dans le champ visuel de l'utilisateur (12) de manière à y reconstituer le motif (64).

9. Système électronique de visualisation (10), comprenant :
- un appareil électronique (18), comportant un écran d'affichage (40), et
- un casque (20) comportant un support de réception (56) configuré pour recevoir l'appareil électronique (18), une surface d'appui (58) destinée à être en contact avec le visage d'un utilisateur (12), et deux dispositifs optiques (60) disposés entre le support de réception (56) et la surface d'appui (58), les dispositifs optiques (60) étant destinés à être positionnés entre l'écran d'affichage (40) et les yeux (22) de l'utilisateur (12),
**caractérisé en ce que** l'appareil électronique (18) est selon la revendication 7 ou 8.

10. Système (10) selon la revendication 9, dans lequel le système (10) comprend en outre un module de réception configuré pour recevoir au moins une image de la part d'un engin volant motorisé (14), tel qu'un drone, en particulier un drone à voilure tournante, et
dans lequel le module d'affichage (42) est relié au module de réception et est apte à afficher sur l'écran d'affichage (40) chaque image reçue.

11. Système (10) selon la revendication 9 ou 10, dans lequel le système (10) est un système de visualisation en réalité virtuelle.
